Europäisches Patentamt

(19) European Patent Office

Office européen des brevets

(11) Publication number: **0 032 844**
**A2**

(12) # EUROPEAN PATENT APPLICATION

(21) Application number: **81300262.3**

(22) Date of filing: **21.01.81**

(51) Int. Cl.³: **G 01 N 27/16,** G 01 N 31/10,
G 01 N 25/30

(30) Priority: **21.01.80 GB 8001988**

(43) Date of publication of application: **29.07.81**
**Bulletin 81/30**

(84) Designated Contracting States: **AT BE CH DE FR IT LI
LU NL SE**

(71) Applicant: **J&S Sieger Limited, 31 Nuffield Estate, Poole
Dorset BH17 7RZ (GB)**

(72) Inventor: **Mitchell, Jolyon Paul, 36 Lower Hillside Road,
Wool Wareham Dorset (GB)**
Inventor: **Bell, Edmund George, 50 Wareham Road,
Lytchett Matravers Dorset (GB)**

(74) Representative: **Brereton, Paul Arthur et al, REDDIE &
GROSE 16 Theobalds Road, London WC1X 8PL (GB)**

(54) **Gas detector filter.**

(57)   A gas detector 10 comprises a body 3 which houses a catalytic detector element 4. The detector element is of the type which functions by oxidation of the flammable gas on the surface of the element, which contains an oxidation catalyst on a support of porous material. The support is formed around a small coil of metallic wire having a significant temperature coefficient of resistance. An electrical current is passed through the wire to heat the detector to 300° C–500° C and the exothermic oxidation of the flammable gas increases the temperature further so that the presence of the flammable gas can be detected by detecting the consequent change in resistance.

   In order to protect the catalyst material of the detector element 14 from substances which can impair sensitivity a filter 8 is disposed in the opening 17 through which the detector communicates with the atmosphere being monitored.

   The filter 8 comprises a micro-porous alumino-silicate compound, for example a zeolite, which prevents these substances reaching the detector element 4 but permits the passage of the gases to be detected.

   The compound is retained between two members of porous permeable material, for example, high density polythene and is contained within an enclosure of wire mesh.

COMPLETE DOCUMENT

ACTORUM AG

FILTER

The present invention relates to filters used to protect the sensitive elements of gas detection sensors from substances which can impair the sensitivity of the elements to the gases or vapours which the sensor is required to detect.

An example of the type of sensor with which the filters of the present invention may be used is one having elements which detect flammable gases and vapours by means of catalytic combustion.

Such elements, one type of which is generally known as a "pellistor", function by oxidation of the flammable gas or vapour on the surface of the element, which normally contains an oxidation catalyst dispersed on a support of porous material. This catalyst support is formed around a small coil of metallic wire having a significant temperature coefficient of resistance. In use, a sufficient electrical current is passed through the wire to heat the pellistor to a temperature in the range $300^{\circ}$C to $500^{\circ}$C.

The exothemic oxidation reaction of the flammable species on the pellistor increases the temperature of the device and is detected by observing the change in the potential difference across the element arising from the change in resistance of the coil. The change in potential difference is quantitatively related to the concentration of the flammable species present.

A difficulty which has been experienced with catalytic elements of the type described above is that, in some circumstances, changes in the electrical characteristics of the element occur over

0032844

long periods of time. These changes are believed to be due to nonvolatile residues deposited on the surface of the element which tend to poison the catalyst and/or obstruct the normal flow of gas vapour to the surface, so reducing the sensitivity of the device. For example, this type of loss of sensivity, which is usually irreversible, has been encountered when catalytic elements have been used to detect flammable gases or vapours in the presence of silicone compounds and organo-lead compounds. The presence of either of these materials, even in very small concentration, (typically a few parts per million) can cause severe loss of detector sensitivity.

The use of charcoal filters to protect catalytic elements from the above deterioration is well established. These filters may take the form of charcoal granules or of a woven cloth.

The function of the charcoal is to remove the catalyst poison from the flow of gas or vapour to the detector element by a filtration process. The main drawback to this type of filter is that the charcoal may filter out the gas or vapour which is to be detected. This effect can, under certain circumstances, increase the time between the creation of a leak of gas or vapour and its detection, by an unacceptable amount.

In addition, the porous structure of charcoal is unique to each sample, being dependent upon many factors including starting material, heat treatment history and the presence of impurities, some of which are very difficult to control in a production process.

The present invention seeks to overcome some of the limitations of charcoal filters and to provide protection for the sensitive elements of catalytic gas detection sensors from poisoning.

According to the present invention there is provided a gas detector comprising a detector element, a casing in which the detector element is housed having an aperture through which the detector element communicates with the atmosphere to be monitored, and a filter disposed in the aperture to protect the detector element from substances which can impair its sensitivity; characterised in that the filter comprises a micro-porous alumino-silicate compound.

The alumino-silicate compound may be a zeolite and may be in fine powder form retained between a porous permeable material, alternatively the compound could be in solid form e.g. a mixture of zeolite pellets with a binder.

Advantages of the invention are:-

(a) The filtration material may be obtained in a form with reproducible filtration characteristics from one batch to the next.

(b) The filter is less prone than charcoal to delay the passage of gases or vapours of small molecular size, such as n-butane.

(c) The performance of the filter is less susceptible to changes in humidity of the surrounding atmosphere than is the performance of a charcoal filter.

(d) Protection equal to that afforded by charcoal against the ingress of catalyst poisons, such as silicones, is possible with certain designs of the filter without the disadvantages of charcoal mentioned above.

One embodiment of the invention will now be described in detail, by way of example, with reference to the accompanying drawings, of which:-

Fig. 1 is a schematic cross-sectional view of a catalytic gas detector including a filter in accordance with the invention;

Fig. 2 is an enlarged cross-section through the filter of

0032844

Fig. 1;

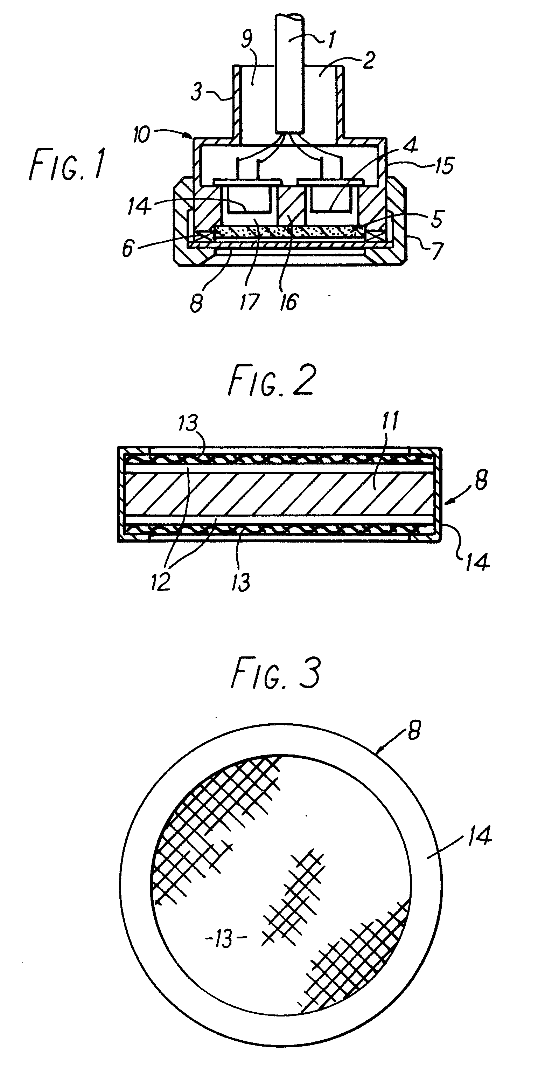

Fig. 3 is an enlarged plan view of the filter of Fig. 1; and

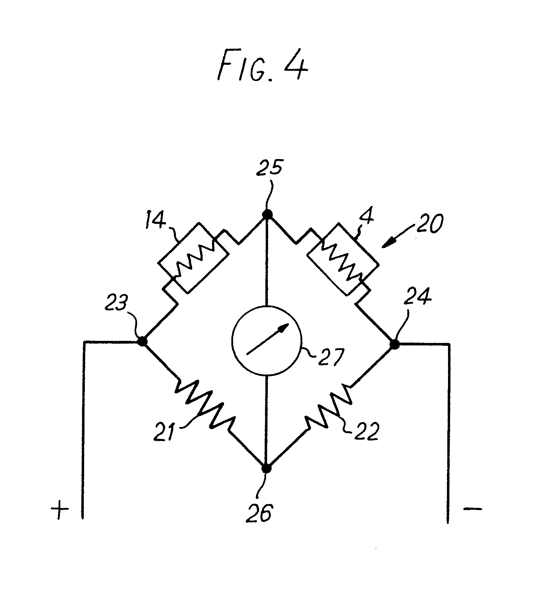

Fig. 4 is a circuit diagram showing the arrangement of the detector and compensator elements of the gas detector of Fig. 1.

The catalytic flammable gas detector assembly shown in Fig. 1 comprises a body 3 which houses a detector element 4 and a compensator element 14. The body 3 is composed of metal or plastics material and is generally tubular in shape, having an enlarged cylindrical portion 15 with an end wall 16. The end wall 16 has openings 17 passing through it in which the detector element 4 and compensating element 14 are located.

In the embodiment shown, the detector element 4 is of a known type comprising a coil of platinum wire which has a good temperature coefficient of resistance coated with a refractory material, such as titanium dioxide, which in turn, carries a layer of a suitable catalyst material such as finely divided platinum or palladium. A suitable detector element is described in more detail in our published U.K. Patent Specification No. 2013901A. An electrical cable 1 passes through an opening 9 at one end of the generally tubular body 3 to supply current to the detector coil and heat it to a temperature of $300^{\circ}C$ to $500^{\circ}C$. The detector coil is housed in a standard cap of the sort used to house transistors.

The atmosphere being monitored reaches the detector element by diffusing through a hole which is formed in the cap. The hole may have a diameter of between 2mm and 2.5mm or extend the whole width of the cap top, that is, about 8mm. The presence of the catalyst causes oxidation of the gas which is to be detected at the detector surface. The oxidation reaction causes the temperature at the surface of the detector to rise by between $200^{\circ}C$ and $300^{\circ}C$, producing a detectable change in the resistance of the coil.

The compensator element 14 enables the detector assembly 10 to compensate for variations in the ambient temperature. One form of compensator element 14 is of the same construction as the detector element 4 but lacks the catalyst material so that variations in the resistance of the compensator coil are caused only by variations in the ambient temperature. Alternatively, the detector and compensator elements 4 and 14 may be identical but the compensator 14 is almost completely isolated from the surrounding atmosphere by placing a blanking-off plate across the hole in its cap. A small hole is formed in the blanking-off plate to allow the compensator 14 to experience the ambient temperature.

The detector element 4 and the compensator element 14 are connected in series so that they form one arm of a conventional bridge circuit 20 (see Fig. 4). Two resistances 21 and 22 are connected in series to form the second arm of the circuit 20. The values of the resistances 21 and 22 are equal so that, in the absence of an oxidation reaction at the detector element 4, the bridge circuit 20 is balanced and no current flows through a current detector 27 connected between points 25 and 26 on the two arms of the circuit 20 when a voltage is applied across the points 23 and 24.

Any change in the resistance of the coil in the detector element 4 caused by a change in the ambient temperature is accompanied by a corresponding change in the resistance of the compensator element 14. As a result, the bridge remains balanced even if there are changes in ambient temperature. However, when oxidation of the species being detected occurs at the detector element 4 and causes a change in the temperature at the surface of the detector element 4, there is no corresponding change in the temperature at the compensator element 14 and the bridge becomes unbalanced so that current flows between the points 25 and 26. This current flow is detected by the current sensing device 27 and signals the presence of the flammable species in the atmosphere being monitored.

Gases diffuse into the gas detector assembly 10 through gas entry ports which are formed by the openings 17 in the end wall 16 of the body 3. A filter 8 is placed across the entry ports to prevent poisoning of the catalytic detector element 4 by undesirable substances. The filter 8 is held in place by a retaining ring 7 which fits over the cylindrical end of the body 3. A sealing ring 6 is located between the filter 8 and the end wall 16 to prevent gases seeping around the edge of the filter 8 and reaching the detector element 4 in an unfiltered state.

A flash arrestor 5 comprising a sintered metal sieve 3mm in thickness is placed between the filter 8 and the detector element 4 to ensure that there is no possibility of flames caused by the oxidation of the gas being detected, escaping from the body 3 of the assembly.

The detector assembly 10 is sealed to the outside atmosphere by filling the body 3 with an epoxy resin material so that the atmosphere can only reach the detector element by diffusing through the filter 8.

The construction of the filter 8 is shown in greater detail in Figs. 2 and 3.

Referring to these Figures, a 1mm thick layer 11 of zeolite powder, is sandwiched between two 0.75mm thick circular discs 12 of permeable high density polythene (such as 'Vyon F', manufactured by Porvair Limited, Kings Lynn, Norfolk). The particular form of zeolite to be used is chosen so that it will permit the gas to be detected to pass through the filter whilst preventing the passage of gases which will poison the catalyst. Where any of the shorter hydrocarbons for example methane, butane or hexane, or carbon monoxide or hydrogen are to be detected a suitable zeolite material is that sold under the trade name LINDE type 13X which prevents the passage of silicones which would poison the catalytic layer. The construction is further retained by two circular discs 13 of stainless steel wire mesh and the complete sandwich is clamped at the rim by means of a stainless steel retaining ring 14 spun over the periphery of the wire mesh discs 13. The filter is circular in plan view of about 34mm in diameter and 2.5mm in depth.

The catalytic gas detector described above represents only one type of gas detector in which a filter element may be used in accordance with the invention. In particular, although in the embodiment described the oxidation of the flammable species is allowed to cause the temperature and hence the resistance of the coil to rise, the invention may be applied to alternative arrangements in which the current through the coil is controlled so that it remains at constant resistance and temperature, the current being reduced to reduce the self-heating in compensation for the external heating caused by

0032844

oxidation of the flammable species.

This may be achieved by using a constant-resistance electrical drive to the detector element. When such a drive is employed, the reduction in the electrical power supplied to the coil of the detector element is measured to indicate the reduction in demand for self-heating when the element is being heated externally by oxidation of the flammable species, and thus provide an indication of the presence of the flammable species.

CLAIMS

1.      A gas detector comprising a detector element, a casing in which the detector element is housed having an aperture through which the detector element communicates with the atmosphere to be monitored, and a filter disposed in the aperture to protect the detector element from substances which can impair its sensitivity; characterised in that the filter comprises a micro-porous alumino-silicate compound.

2.      A gas detector according to claim 1 characterised in that the  compound is a zeolite.

3.      A gas detector according to claim 1 or 2 characterised in that the compound is retained between two members of porous permeable material.

4.      A gas detector according to claim 3 characterised in that the porous permeable material is high density polythene.

5.      A gas detector according to claim 3 or 4 characterised in that the compound and the porous permeable members are contained within an enclosure of wire mesh.

0032844

FIG. 1

FIG. 2

FIG. 3

FIG. 4